# EUROPEAN PATENT SPECIFICATION

(11) **EP 3 385 687 B1**
(45) Date of publication and mention of the grant of the patent: **25.10.2023**
(21) Application number: 16870499.7
(22) Date of filing: 22.11.2016
(51) Int. Cl.: G01J 3/50, G01J 1/02, G01J 3/02

(54) **OPTICAL DEVICE FOR MEASUREMENT**
OPTISCHE VORRICHTUNG ZUR MESSUNG
DISPOSITIF OPTIQUE DE MESURE

(30) Priority: 30.11.2015 JP 2015233288
(43) Date of publication of application: 10.10.2018
(73) Proprietor: Konica Minolta, Inc., Tokyo 100-7015 (JP)
(72) Inventor: KADOWAKI, Yutaka, Tokyo 100-7015 (JP); KOSAKA, Akira, Tokyo 100-7015 (JP)
(74) Representative: Hoffmann Eitle
(86) International application number: PCT/JP2016/084597
(87) International publication number: WO 2017/094562

(56) References cited:
- DE-A1-102004 023 156
- DE-A1-102007 028 606
- GB-A- 2 217 006
- JP-A- 2010 025 558
- JP-A- 2015 202 316
- JP-A- 2015 204 580
- KR-A- 20140 003 664
- US-B1- 6 249 348

## Description

### Technological Field

The present invention relates to an optical device for measurement.

### Background

Regarding conventional optical devices for measurement, Japanese Laid-Open Patent Publication No. 2002-310800 for example discloses an optical system for measurement as well as a tristimulus photoelectric colorimeter equipped with the optical system, with the aim of accurately measuring optical characteristics of a high-directivity object even when the light intensity is extremely weak (Japanese Laid-Open Patent Publication No. 2002-310800).

The tristimulus photoelectric colorimeter disclosed in Japanese Laid-Open Patent Publication No. 2002-310800 includes an objective lens having a positive power for focusing only those beams emitted at emission angle α or less among beams emitted from a region-to-be-measured of an object, an optical fiber having an entrance surface through which the focused beam from the objective lens enters, for splitting the entering beam into three beams to output the beams, and a photoreceptor sensor receiving the three beams from the optical fiber for emitting a photoreceptor signal corresponding to tristimulus values.

Other examples of the prior art can be seen in documents GB 2 217 006 A, DE 10 2004 023156 A1, DE 10 2007 028606 A1, US6249348 B1 and KR20140003664.

### Summary

### Technical Problem

As an optical device for measuring the light intensity (photometry) or measuring colors (colorimetry), the above-referenced tristimulus photoelectric colorimeter disclosed in Japanese Laid-Open Patent Publication No. 2002-310800 is known, for example. Such a tristimulus photoelectric colorimeter is equipped with an optical fiber and various electronic components. Light from an object to be measured enters through an objective lens, and the optical fiber directs the light toward a photoreceptor sensor. The electronic components process a photoreceptor signal that is output from the photoreceptor sensor.

Depending on the location of the electronic components generating heat, the influence of heat from the electronic components on the optical fiber may vary in some cases. In such cases, the color measurement accuracy of the tristimulus photoelectric colorimeter may be deteriorated.

An object of the present invention is therefore to solve the above problem and provide an optical device for measurement suppressing deterioration of the measurement accuracy due to heat generated from electronic components.

### Solution to Problem

An optical device for measurement according to the present invention includes the technical features of claim 1.

### Advantageous Effects of Invention

According to the present invention, an optical device for measurement suppressing deterioration of the measurement accuracy due to heat generated from electronic components can be provided.

### Brief Description of the Drawings

Fig. 1 is a perspective view showing an exterior of a tristimulus photoelectric colorimeter in an embodiment of the present invention.
Fig. 2 is a cross-sectional view showing the tristimulus photoelectric colorimeter in Fig. 1.
Fig. 3 is a block diagram showing an internal configuration of the tristimulus photoelectric colorimeter in Fig. 1.
Fig. 4 shows a specific configuration of a measurement optical system and a photoelectric converter in Fig. 2.
Fig. 5 shows an irradiation range of a beam emitted from an optical fiber.
Fig. 6 shows arrangement of a controller and a power supply over the outer circumference of a beam splitting member in Fig. 2.
Fig. 7 shows a comparative example of arrangement of electronic components and substrates.
Fig. 8 is a cross-sectional view showing a specific configuration of the beam splitting member in Fig. 2.
Fig. 9 is a cross-sectional view showing Modification 1 of the arrangement of the controller and the power supply in Fig. 6.
Fig. 10 is a cross-sectional view showing Modification 2 of the arrangement of the controller and the power supply in Fig. 6.
Fig. 11 is a cross-sectional view showing Modification 3 of the arrangement of the controller and the power supply in Fig. 6.
Fig. 12 is a cross-sectional view showing Modification 4 of the arrangement of the controller and the power supply in Fig. 6.

### Detailed Description of Embodiments

An embodiment of the present invention is described with reference to the drawings. In the drawings referenced below, the same or corresponding members are denoted by the same reference numerals.

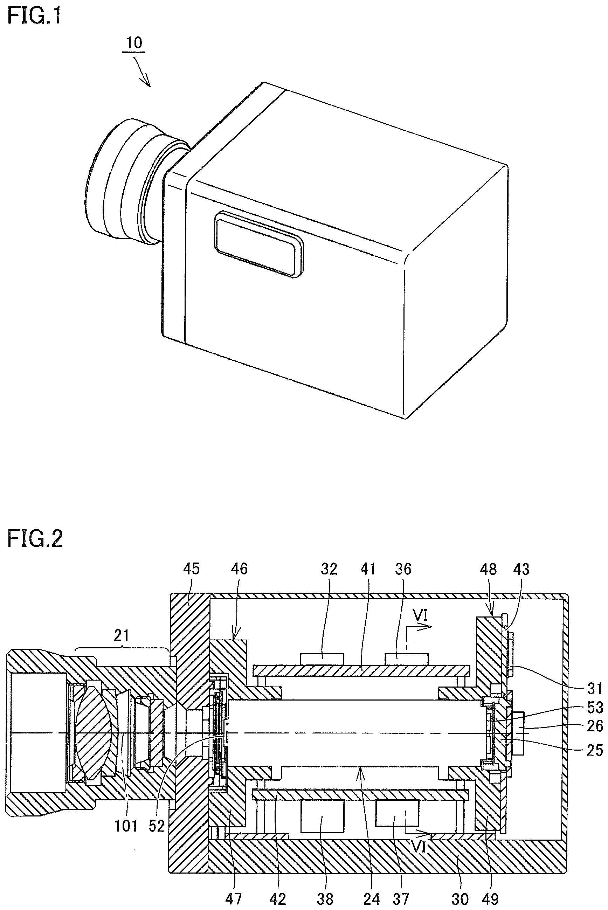

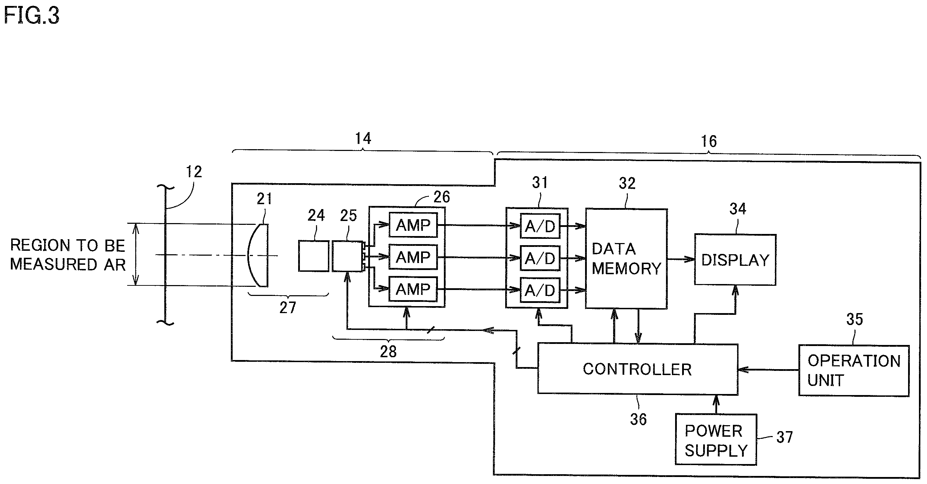

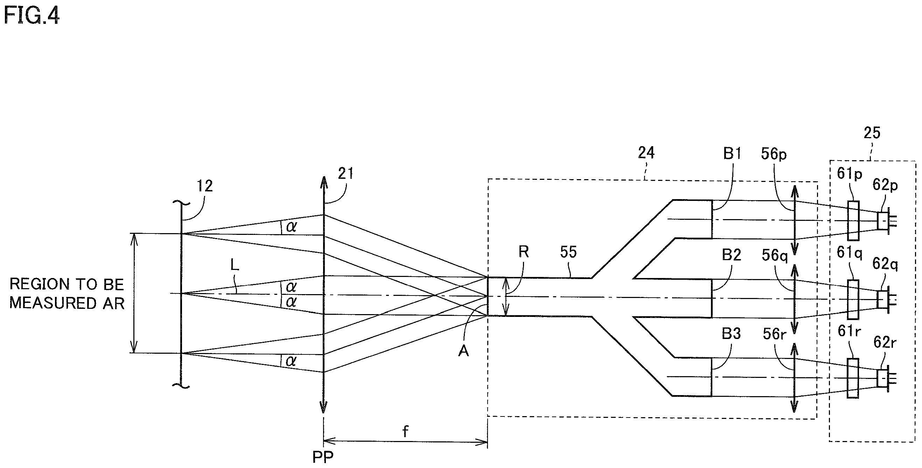

Fig. 1 is a perspective view showing an exterior of a tristimulus photoelectric colorimeter in an embodiment of the present invention. Fig. 2 is a cross-sectional view showing the tristimulus photoelectric colorimeter in Fig. 1. Fig. 3 is a block diagram showing an internal configuration of the tristimulus photoelectric colorimeter in Fig. 1. Fig. 4 shows a specific configuration of a measurement optical system and a photoelectric converter in Fig. 2.

Referring to Figs. 1 to 4, a tristimulus photoelectric colorimeter 10 (hereinafter also referred to simply as "colorimeter 10") in the present embodiment is used for example in an inspection process of a production line for liquid crystal panels, for measuring the brightness and the chromaticity of a display surface 12 of a liquid crystal panel. First, the overall configuration of colorimeter 10 is described.

Colorimeter 10 includes a measurement probe 14 and a meter main unit 16 (see Fig. 3). Measurement probe 14 and meter main unit 16 are configured as an integrated unit.

Measurement probe 14 is disposed to face display surface 12 of a liquid crystal panel to be measured, and spaced from display surface 12 by a predetermined distance (e.g., 3 cm), for example. Measurement probe 14 performs a photoelectric conversion of light from display surface 12 of the liquid crystal panel into an electrical signal (analog signal) and inputs the electrical signal to meter main unit 16.

Measurement probe 14 includes a measurement optical system 27 and a photoreceptor system 28.

Measurement optical system 27 includes an objective lens 21 and a beam splitting member 24. Objective lens 21 is disposed to serve as an entrance unit for allowing light from an object to be measured to enter. Objective lens 21 is formed for example by a plano-convex lens and has a single positive power. Beam splitting member 24 is disposed to serve as an optical guide for guiding the light entering through objective lens 21. Beam splitting member 24 splits the beam transmitted through objective lens 21 into three beams.

Photoreceptor system 28 includes a photoelectric converter 25 and an amplifier 26. Photoelectric converter 25 receives the light guided through beam splitting member 24 for converting the light into an electrical signal. Photoelectric converter 25 includes photoreceptor sensors 62p, 62q, 62r having spectral sensitivity characteristics of a standard observer (see Fig. 4). Photoreceptor sensors 62p, 62q, 62r receive the three beams emitted from beam splitting member 24 for performing photoelectric conversion on the beams into electrical signals depending on the incident intensity. Amplifier 26 amplifies the electrical signal (voltage) output from each of photoreceptor sensors 62p, 62q, 62r to a predetermined level.

Meter main unit 16 converts the electrical signal (analogue signal) input from measurement probe 14 into a digital signal and performs a predetermined arithmetic operation on the signal. Meter main unit 16 performs the arithmetic operation to thereby calculate tristimulus values (X, Y, Z), xyY (chromaticity coordinates, luminance) and TΔuvY (correlated color temperature, color difference from black body locus, luminance) defined by the CIE (International Commission on Illumination), for example, and causes display 34 to show the results of the arithmetic operation.

Referring to Fig. 4, a configuration of measurement probe 14 (measurement optical system 27 and photoreceptor system 28) is described in more detail. Beam splitting member 24 is disposed on optical axis L of light entering through objective lens 21 (also referred to simply as "optical axis of objective lens 21" hereinafter). Beam splitting member 24 includes an optical fiber 55 propagating light and lenses 56p, 56q, 56r having a positive power.

Optical fiber 55 is made up of a plurality of optical fibers bundled together. Optical fiber 55 made up of the bundled optical fibers branches at a central portion into three so that optical fiber 55 has one beam entrance surface A and three beam emission surfaces B1, B2, B3. Optical fiber 55 is disposed so that beam entrance surface A is located away from image-side principal point PP of objective lens 21 by focal length f of objective lens 21 (for the sake of convenience of description, the image-side principal point coincides with the object-side principal point in the present embodiment). That is to say, objective lens 21 and optical fiber 55 constitute a telecentric optical system.

While optical fiber 55 is used for beam splitting member 24, beam splitting member 24 is not limited to such a structure. Other optical components performing an equivalent function to the optical fiber such as light guide may be used.

When measurement probe 14 is positioned at a predetermined distance from display surface 12 of the liquid crystal panel, the beams entering beam entrance surface A of optical fiber 55 are only those beams emitted at an angle smaller than or equal to maximum value α of the emission angle with respect to the normal (direction parallel to optical axis L in Fig. 4) to region-to-be-measured AR, among beams emitted from respective parts of region-to-be-measured AR of the liquid crystal panel. Maximum emission angle α is determined by focal length f of objective lens 21 and diameter R of beam entrance surface A of optical fiber 55. The entering beams are split in optical fiber 55 into three beams that are emitted from beam emission surfaces B1, B2, and B3, respectively.

Each of the optical fibers constituting optical fiber 55 has a double-layer structure made up of a core located at the center and a cladding covering the periphery of the core. The core is designed to have a higher refractive index than the cladding. Therefore, the light is propagated in the state of being confined within the core by total reflection.

Optical fiber 55 is disposed in a posture of being bent in a predetermined shape, while beam entrance surface A and beam emission surfaces B1, B2, B3 are fixed. Therefore, if there is no vibrational impact or state change such as temperature change, the posture of optical fiber 55 is maintained. In this case, light entering beam entrance surface A is emitted at a predetermined angle from beam emission surfaces B1, B2, B3. However, in the event of vibrational impact or state change such as temperature change, the degree of bending or posture of optical fiber 55 is changed. As a result of this, light entering beam entrance surface A will be emitted from beam emission surfaces B1, B2, B3 at an emission angle shifted from a predetermined angle. In this case, the angle of incidence of the light to a spectral sensitivity correction filter described later herein is shifted from a predetermined angle. Therefore, if a filter having spectral sensitivity characteristics depending on the angle of incidence is used as the spectral sensitivity correction filter, measurement data will have an error.

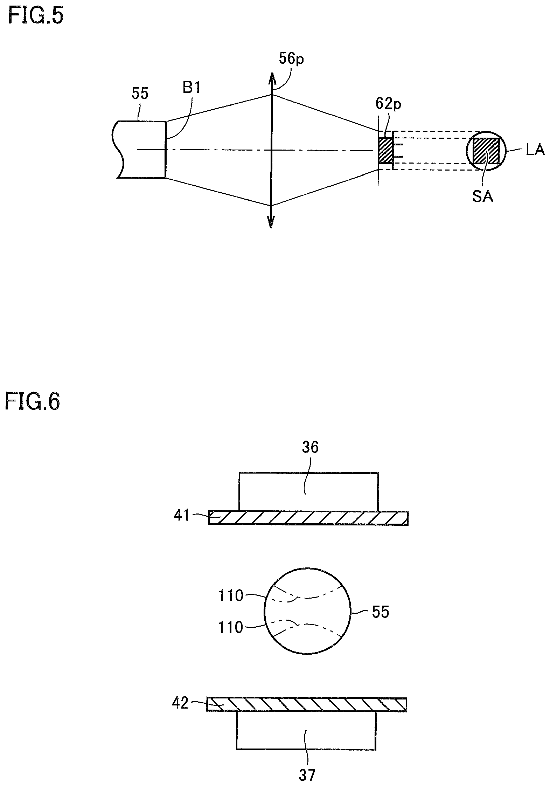

Fig. 5 shows an irradiation range of a beam emitted from the optical fiber. Referring to Figs. 4 and 5, lens 56p focuses the beam emitted from beam emission surface B1 of optical fiber 55 on photoreceptor sensor 62p so that irradiation range LA of the beam substantially matches photo-receiving range SA of photoreceptor sensor 62p.

Likewise, lens 56q focuses the beam emitted from beam emission surface B2 of optical fiber 55 on photoreceptor sensor 62q so that the irradiation range of the beam substantially matches the photo-receiving range of photoreceptor sensor 62q. Lens 56r focuses the beam emitted from beam emission surface B3 of optical fiber 55 on photoreceptor sensor 62r so that the irradiation range of the beam substantially matches the photo-receiving range of photoreceptor sensor 62r.

In this way, the beams emitted from optical fiber 55 are focused on respective photo-receiving ranges of photoreceptor sensors 62p, 62q, 62r. Thus, each one-third of the beams entering optical fiber 55 (all the beams emitted from respective parts of region-to-be-measured AR of the liquid crystal panel at an emission angle less than or equal to maximum emission angle α with respect to the normal to region-to-be-measured AR) enters corresponding one of photoreceptor sensors 62p, 62q, 62r. Therefore, the amount of light received by photoreceptor sensors 62p, 62q, 62r does not decrease.

Referring to Fig. 4, photoelectric converter 25 further includes spectral sensitivity correction filters 61p, 61q, 61r for photoreceptor sensors 62p, 62q, 62r to have a spectral sensitivity of a standard observer defined by the CIE.

Photoreceptor sensors 62p, 62q, 62r are formed of respective SPCs (silicon photocells) having respective photo-receiving sensitivities substantially identical to each other. Photoreceptor sensors 62p, 62q, 62r are disposed at respective positions on the optical axes of lenses 56p, 56q, 56r, respectively, so that respective irradiation ranges of the beams focused by lenses 56p, 56q, 56r match respective photo-receiving ranges of photoreceptor sensors 62p, 62q, 62r. Spectral sensitivity correction filters 61p, 61q, 61r are disposed at respective appropriate positions located between photoreceptor sensors 62p, 62q, 62r and lenses 56p, 56q, 56r.

Spectral sensitivity correction filter 61p has a filtering characteristic exhibiting sensitivity to the R (red) wavelength range. With this filtering characteristic, the photo-receiving sensitivity of photoreceptor sensor 62p is corrected to a photo-receiving sensitivity of a matching function (x-bar λ) with a high sensitivity to the red wavelength range. Spectral sensitivity correction filter 61q has a filtering characteristic exhibiting sensitivity to the G (green) wavelength range. With this filtering characteristic, the photo-receiving sensitivity of photoreceptor sensor 62q is corrected to a photo-receiving sensitivity of a matching function (y-bar λ) with a high sensitivity to the green wavelength range. Spectral sensitivity correction filter 61r has a filtering characteristic exhibiting sensitivity to the B (blue) wavelength range. With this filtering characteristic, the photo-receiving sensitivity of photoreceptor sensor 62r is corrected to a photo-receiving sensitivity of a matching function (z-bar λ) with a high sensitivity to the green wavelength range. From photoreceptor sensors 62p, 62q, 62r, photoreceptor signals corresponding to tristimulus values (X, Y, Z) are output, respectively.

Referring to Figs. 1 to 3, a configuration of meter main unit 16 is described next in more detail. Meter main unit 16 includes an A/D converter 31, a data memory 32, a display 34, an operation unit 35, a controller 36, a power supply 37, and a communication unit 38.

A/D converter 31 converts the photoreceptor signal that is input from measurement probe 14 into a digital signal (hereinafter referred to as measurement data). Data memory 32 stores the measurement data that is output from A/D converter 31. Controller 36 controls the measurement operation through centralized control of the operation of measurement probe 14 and respective operations of the elements in meter main unit 16. Controller 36 uses the measurement data stored in data memory 32 to calculate tristimulus values (X, Y, Z), xyY (chromaticity coordinates, luminance) and TΔuvY (correlated color temperature, color difference from black body locus, luminance) defined by the CIE, for example.

Display 34 shows the results of the calculations by controller 36. Operation unit 35 receives various pieces of information regarding the measurement (instruction to measure, setting of a display mode, measurement range, for example). Power supply 37 transforms the voltage of electric power supplied from an external AC adapter (not shown) and supplies the resultant electric power to each element through controller 36. Communication unit 38 outputs the results of the calculations by controller 36 to an external component.

Meter main unit 16 further includes a CPU substrate 41, a power supply substrate 42, and a sensor substrate 43 (see Fig. 2). On CPU substrate 41, data memory 32 and controller 36 are mounted. On power supply substrate 42, communication unit 38 and power supply 37 are mounted. On sensor substrate 43, amplifier 26 and A/D converter 31 are mounted.

Next, the arrangement of various electronic components of meter main unit 16 and substrates is described in detail.

Referring to Fig. 2, colorimeter 10 further includes a reference plate 45, a support member 46, and a support member 48.

Reference plate 45 is interposed between objective lens 21 and beam splitting member 24 in the direction of the optical axis of objective lens 21. Support member 46 and support member 48 are disposed to support the opposite ends of beam splitting member 24 in the optical axis direction of objective lens 21. Beam splitting member 24 is positioned on the optical axis of objective lens 21 by support member 46 and support member 48.

Support member 46 has a flange 47 and support member 48 has a flange 49. Flange 47 and flange 49 are each disposed in the shape of a collar on the outer circumference of beam splitting member 24. Beam splitting member 24 is attached through flange 47 to reference plate 45.

CPU substrate 41 and power supply substrate 42 are arranged over the outer circumference of beam splitting member 24, so that they are displaced from each other in the circumferential direction about the optical axis of objective lens 21. CPU substrate 41 and power supply substrate 42 are arranged to extend in a plate shape along the optical axis direction of objective lens 21. Sensor substrate 43 is disposed on the end faces of support member 48 and photoelectric converter 25. Sensor substrate 43 is disposed to extend in a plate shape along the direction orthogonal to the optical axis of objective lens 21.

Beam splitting member 24 has a first facing surface 52 and a second facing surface 53. In the optical axis direction of objective lens 21, first facing surface 52 faces objective lens 21, and second facing surface 53 faces photoelectric converter 25. In the optical axis direction of objective lens 21, CPU substrate 41 and power supply substrate 42 are arranged between first facing surface 52 and second facing surface 53 of beam splitting member 24. In the optical axis direction of objective lens 21, CPU substrate 41 and power supply substrate 42 are arranged between flange 47 and flange 49. In the optical axis direction of objective lens 21, CPU substrate 41 and power supply substrate 42 are arranged between flange 47 and sensor substrate 43.

If CPU substrate 41 and power supply substrate 42 are arranged opposite to measurement optical system 27 (objective lens 21 and beam splitting member 24) with respect to sensor substrate 43, the total length of colorimeter 10 in the optical axis direction of objective lens 21 increases. In contrast, in the present embodiment, CPU substrate 41 and power supply substrate 42 extending in the optical axis direction of objective lens 21 are arranged over the outer circumference of beam splitting member 24 to thereby enable reduction of the total length of colorimeter 10.

For example, in the case where a small-sized liquid crystal panel such as that of a smart phone is to be measured, a plate may be equipped with a plurality of colorimeters 10 arranged on the plate so as to simultaneously inspect multiple small-sized liquid crystal display panels. In such a case, the small size of colorimeter 10 makes it easy to mount multiple colorimeters 10 on the plate simultaneously.

Fig. 2 shows a configuration in which data memory 32 and controller 36 are disposed on the surface of CPU substrate 41 located opposite to the surface of CPU substrate 41 facing beam splitting member 24, and power supply 37 and communication unit 38 are disposed on the surface of power supply substrate 42 located opposite to the surface of power supply substrate 42 facing beam splitting member 24. The configuration is not limited to this, and data memory 32 and/or controller 36 may be disposed on the surface of CPU substrate 41 facing beam splitting member 24, and power supply 37 and/or communication unit 38 may be disposed on the surface of power supply substrate 42 facing beam splitting member 24.

Fig. 6 shows arrangement of the controller and the power supply over the outer circumference of the beam splitting member in Fig. 2. Fig. 6 shows a cross section along line VI-VI in Fig. 2.

Referring to Figs. 2 and 6, in colorimeter 10 in the present embodiment, controller 36 and power supply 37 are arranged so that they are displaced from each other in the circumferential direction about the optical axis of objective lens 21. Controller 36 and power supply 37 are arranged opposite to each other with beam splitting member 24 (optical fiber 55) interposed therebetween, as seen in the optical axis direction of objective lens 21.

CPU substrate 41 and power supply substrate 42 are arranged to be displaced from each other in the circumferential direction about the optical axis of objective lens 21. CPU substrate 41 and power supply substrate 42 are spaced from each other in the circumferential direction about the optical axis of objective lens 21. CPU substrate 41 and power supply substrate 42 are arranged opposite to each other with beam splitting member 24 (optical fiber 55) interposed therebetween, as seen in the optical axis direction of objective lens 21. CPU substrate 41 and power supply substrate 42 are arranged in parallel to each other.

Controller 36 and power supply 37 are disposed at respective positions overlapping each other in the optical axis direction of objective lens 21. Controller 36 and power supply 37 may be arranged away from each other in the optical axis direction of objective lens 21. Preferably, the distance between controller 36 and beam splitting member 24 (optical fiber 55) is substantially equal to the distance between power supply 37 and beam splitting member 24 (optical fiber 55).

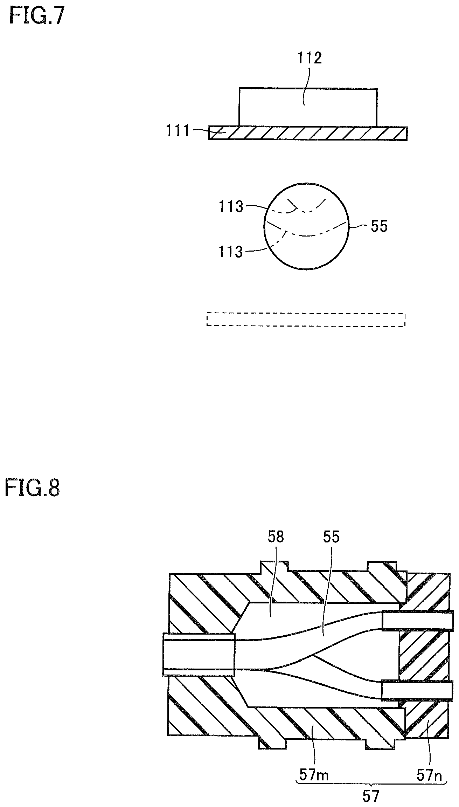

Fig. 7 shows a comparative example of the arrangement of the electronic components and the substrates. Referring to Fig. 7, in this comparative example, an electronic component 112 and a substrate 111 on which electronic component 112 is mounted are disposed over the outer circumferential surface of optical fiber 55. Electronic component 112 and substrate 111 are disposed on only one side of optical fiber 55 about the optical axis of objective lens 21.

In such a configuration, heat is generated from electronic component 112 on substrate 111 due to operation of the colorimeter, and the heat causes optical fiber 55 to be heated in one direction. Accordingly, as indicated by two-dot chain lines 113 in Fig. 7, the temperature distribution curves of optical fiber 55 are unbalanced. In this case, as mentioned above, the degree of bending or posture of optical fiber 55 is changed to cause the angle of incidence of light to the spectral sensitivity correction filter to be shifted, resulting in an error of the measurement data.

Referring to Figs. 2 and 6, in the present embodiment in contrast to the above, operation of the colorimeter causes controller 36 mounted on CPU substrate 41 to generate heat and power supply 37 mounted on power supply substrate 42 to generate heat.

At this time, optical fiber 55 is heated in the respective two directions in which controller 36 and power supply 37 are disposed. Accordingly, as indicated by two-dot chain lines 110 in Fig. 6, the temperature distribution curves of optical fiber 55 are symmetrical with respect to the optical axis of objective lens 21. Thus, change of the degree of bending or posture of optical fiber 55 can be suppressed. Even when optical fiber 55 is deformed, the deformation can be prevented from being asymmetrical with respect to the optical axis of objective lens 21. As a result, the spectral sensitivity correction filter can exhibit desired spectral sensitivity characteristics, and deterioration of the measurement accuracy can be prevented.

In the foregoing, only the positional relation between controller 36 and power supply 37 is described. The positional relation between controller 36 and data memory 32 mounted on CPU substrate 41 and power supply 37 and communication unit 38 mounted on power supply substrate 42 is similar to the positional relation between controller 36 and power supply 37.

Fig. 8 is a cross-sectional view showing a specific configuration of the beam splitting member in Fig. 2. Referring to Fig. 8, beam splitting member 24 further includes a protective member 57.

Protective member 57 is disposed to cover optical fiber 55 to protect optical fiber 55. Protective member 57 as a whole extends in a tubular shape (scabbard shape) around optical fiber 55. Optical fiber 55 is received in protective member 57. Protective member 57 is disposed to support the opposite ends of optical fiber 55.

More specifically, protective member 57 is formed of a combination of a tubular portion 57m and a lid portion 57n. Tubular portion 57m supports one end of optical fiber 55 and extends, in a tubular shape, from this one end toward the other end of optical fiber 55. Tubular member 57m is closed at the other end of optical fiber 55. Lid portion 57n is disposed to close the opening of tubular portion 57m. Lid portion 57n supports the other end of optical fiber 55.

Optical fiber 55 is disposed so as not to be in contact with protective member 57, except for its part supported by protective member 57. Therefore, an air layer 58 is formed between optical fiber 55 and protective member 57. When heat is generated from controller 36 and power supply 37, air layer 58 can serve as a heat insulating layer to suppress temperature increase of optical fiber 55.

Protective member 57 may be formed of a metal. The metal forming protective member 57 is preferably a metal having a high thermal conductivity. Aluminum, brass, or the like, for example, may be used for protective member 57. In this case, heat conduction through protective member 57 can be promoted to enhance the uniformity of thermal distribution in optical fiber 55.

Protective member 57 may be formed of a heat insulator. Typical examples of the heat insulator are a variety of resin materials. In this case, heat transfer from controller 36 and power supply 37 to optical fiber 55 can be suppressed to thereby suppress temperature increase of optical fiber 55.

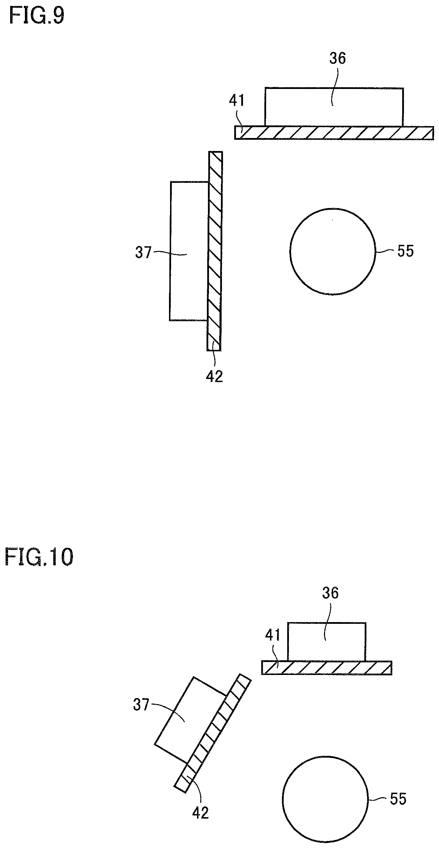

Figs. 9 to 12 are cross-sectional views showing various modifications of the arrangement of the controller and the power supply in Fig. 6. Referring to Fig. 9, in this modification not part of the invention, controller 36 (CPU substrate 41) and power supply 37 (power supply substrate 42) are arranged at respective phase positions displaced from each other by 90° in the circumferential direction about the optical axis of objective lens 21. CPU substrate 41 and power supply substrate 42 are arranged in respective postures extending at an angle of 90° therebetween.

Referring to Fig. 10, in this modification not part of the invention, controller 36 (CPU substrate 41) and power supply 37 (power supply substrate 42) are displaced from each other at an angle therebetween smaller than 90° in the circumferential direction about optical axis of objective lens 21. CPU substrate 41 and power supply substrate 42 are disposed in respective postures extending at an angle therebetween larger than 90° and smaller than 180°.

As seen from the examples illustrated in the modifications in Figs. 9 an 10, the angle at which controller 36 and power supply 37 are displaced from each other in the circumferential direction is not particularly limited.

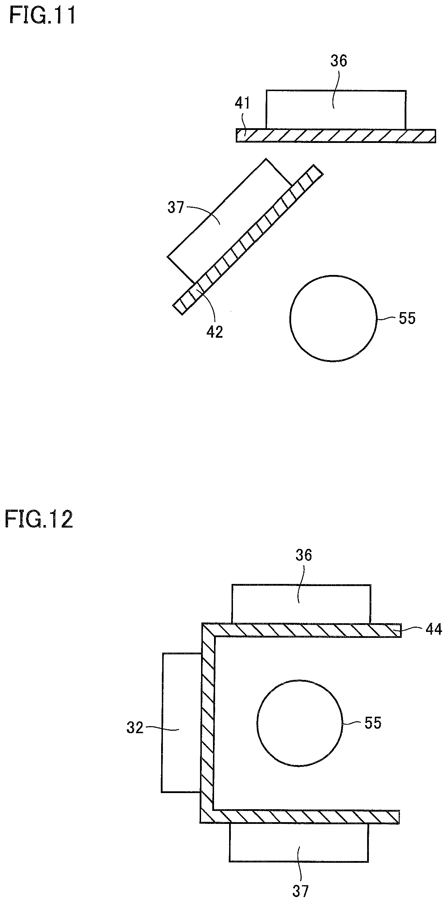

Referring to Fig. 11, in this modification not part of the invention, while controller 36 (CPU substrate 41) and power supply 37 (power supply substrate 42) are displaced from each other in the circumferential direction about the optical axis of objective lens 21, controller 36 and power supply 37 have respective portions overlapping each other. In such a configuration as well, the advantageous effect of suppressing unbalanced temperature distribution of optical fiber 55 can be exhibited to a certain extent.

Referring to Fig. 12, in this modification which is part of the invention, controller 36, data memory 32 and power supply 37 are displaced from each other in the circumferential direction about the optical axis of objective lens 21. Controller 36, data memory 32, and power supply 37 are mounted on a single substrate 44. As illustrated in this modification, a plurality of electronic components displaced from each other in the circumferential direction may be mounted on the same substrate.

A basic structure of the above-described tristimulus photoelectric colorimeter 10 is summarized. Tristimulus photoelectric colorimeter 10 as an optical device for measurement includes: objective lens 21 as an entrance unit to allow light from an object to be measured to enter, photoelectric converter 25 to convert received light into an electrical signal; beam splitting member 24 as an optical guide to guide the light entering through objective lens 21 to photoelectric converter 25; and controller 36 as a first electronic component and power supply 37 as a second electronic component that are arranged around an optical axis of beam splitting member 24 and displaced from each other in the circumferential direction.

Tristimulus photoelectric colorimeter 10 includes: objective lens 21 as an entrance unit to allow light from an object to be measured to enter; beam splitting member 24 as an optical guide disposed on the optical axis of the light entering though objective lens 21 to guide the light entering through objective lens 21; photoelectric converter 25 receiving the light guided through beam splitting member 24 to convert the light into an electrical signal; and controller 36 as a first electronic component and power supply 37 as a second electronic component that are disposed over the outer circumference of beam splitting member 24 about the optical axis of the light entering through objective lens 21 and displaced from each other in the circumferential direction to process the electrical signal from photoelectric converter 25.

Regarding tristimulus photoelectric colorimeter 10 in the invention as defined in claim 1, deterioration of the measurement accuracy for photometry and colorimetry of the colorimeter due to heat generation from controller 36 and power supply 37 can be suppressed.

While the present embodiment is described in connection with tristimulus photoelectric colorimeter 10 capable of both photometry and colorimetry, the present invention is not limited to this and may be applied to an optical device capable of only one of photometry and colorimetry. The present invention is also applicable to a colorimeter based on spectrocolorimetry.

An optical device for measurement according to the present invention includes the features of claim 1.

In the optical device for measurement configured in this manner, the first electronic component and the second electronic component as heat sources are arranged opposite to each other with the optical fiber interposed therebetween, as seen in a direction of an optical axis of the light entering through the entrance unit, so that deterioration of the measurement accuracy of the optical device, due to heat generated from the electronic components, can be suppressed.

The first electronic component is a controller to control measurement operation by the optical device for measurement. The second electronic component is a power supply to transform externally supplied electric power.

In the optical device for measurement configured in this manner, the controller and the power supply generating a greater amount of heat, in particular, are displaced from each other in the circumferential direction over the outer circumference of the optical guide, and therefore, the advantageous effect of suppressing deterioration of the measurement accuracy can be produced more effectively.

The optical guide includes: an optical fiber to propagate light; and a protective member disposed to cover the optical fiber and protect the optical fiber.

In the optical device for measurement configured in this manner, the optical fiber can be protected against externally applied vibration and/or impact.

An air layer is formed between the optical fiber and the protective member.

In the optical device for measurement configured in this manner, heat transfer from the first and second electronic components to the optical fiber can be suppressed.

Preferably, the protective member is formed of a heat insulator.

In the optical device for measurement configured in this manner, heat conduction by the protective member can be promoted to further make uniform the influence of heat from the first and second electronic components on the optical fiber around the optical axis of the light entering through the entrance unit.

Preferably, the protective member is formed of a heat insulator.

In the optical device for measurement configured in this manner, heat transfer from the first and second electronic components to the optical fiber can be suppressed.

Preferably, the optical device for measurement further includes a first substrate on which the first electronic component is mounted and a second substrate on which the second electronic component is mounted.

In the optical device for measurement configured in this manner, influence of heat, on the optical guide, from the first and second electronic components mounted on the first and second substrates respectively can be made more uniform around the optical axis of the light entering through the entrance unit.

Preferably, the optical device for measurement further includes a plurality of substrates each extending in a plate shape along a direction of an optical axis of the light entering through the entrance unit. The optical guide has a first facing surface facing the entrance unit and a second facing surface facing the photoelectric converter, in the direction of the optical axis of the light entering through the entrance unit. All of the substrates are disposed between the first facing surface and the second facing surface in the direction of the optical axis of the light entering through the entrance unit.

Regarding the optical device for measurement configured in this manner, the optical device can be reduced in size in the direction of the optical axis of the light entering through the entrance unit.

It should be construed that embodiments disclosed herein are given by way of illustration in all respects, not by way of limitation. It is intended that the scope of the present invention is defined by the claims, not by the description above.

### Industrial Applicability

The present invention is applicable for example to tristimulus photoelectric colorimeters.

### Reference Signs List

10 tristimulus photoelectric colorimeter; 12 display surface; 14 measurement probe; 16 meter main unit; 21 objective lens; 24 beam splitting member; 25 photoelectric converter; 26 amplifier; 27 measurement optical system; 28 photoreceptor system; 31 A/D converter; 32 data memory; 34 display; 35 operation unit; 36 controller; 37 power supply; 38 communication unit; 41 CPU substrate; 42 power supply substrate; 43 sensor substrate; 44, 111 substrate; 45 reference plate; 46, 48 support member; 47, 49 flange; 52 first facing surface; 53 second facing surface; 55 optical fiber; 56p, 56q, 56r lens; 57 protective member; 57m tubular portion; 57n lid portion; 58 air layer; 61p, 61q, 61r spectral sensitivity correction filter; 62p, 62q, 62r photoreceptor sensor; 112 electronic component

## Claims

1. An optical device for measurement, comprising:
an entrance unit (21) to allow light from an object to be measured to enter;
a photoelectric converter (25) to convert received light into an electrical signal;
an optical guide (24) to guide the light entering through the entrance unit (21) to the photoelectric converter (25); and
a first electronic component (36) and a second electronic component (37) disposed around an optical axis of the optical guide (24) and displaced from each other in a circumferential direction;
wherein the optical guide (24) includes:
an optical fiber (55) to propagate light; and
a protective member (57) disposed to cover the optical fiber (55) and protect the optical fiber (55);
wherein an air layer (58) is formed between the optical fiber (55) and the protective member (57);
**characterized in that** the first electronic component (36) is a controller to control measurement operation by the optical device for measurement, and the second electronic component (37) is a power supply to transform externally supplied electric power;
wherein the controller (36) and the power supply (37) are arranged opposite to each other with the optical fiber (55) interposed therebetween.

2. The optical device for measurement according to claim 1, wherein
the first electronic component (36) and the second electronic component (37) are disposed opposite to each other with respect to the optical guide (24) as seen in a direction of an optical axis of the light entering through the entrance unit (21).

3. The optical device for measurement according to claim 1 or 2, wherein
the protective member (57) is formed of a metal.

4. The optical device for measurement according to claim 1 or 2, wherein
the protective member (57) is formed of a heat insulator.

5. The optical device for measurement according to any one of claims 1 to 4, further comprising a first substrate (41) on which the first electronic component (36) is mounted and a second substrate (42) on which the second electronic component (37) is mounted.

6. The optical device for measurement according to any one of claims 1 to 5, further comprising a plurality of substrates each extending in a plate shape along a direction of an optical axis of the light entering through the entrance unit (21), wherein
the optical guide (24) has a first facing surface (52) facing the entrance unit (21) and a second facing surface (53) facing the photoelectric converter (25), in the direction of the optical axis of the light entering through the entrance unit (21), and
all of the substrates are disposed between the first facing surface and the second facing surface in the direction of the optical axis of the light entering through the entrance unit (21).

## Patentansprüche

1. Optische Vorrichtung zur Messung, umfassend:
eine Eintrittseinheit (21), um Licht von einem zu messenden Objekt eintreten zu lassen;
einen photoelektrischen Wandler (25), um empfangenes Licht in ein elektrisches Signal umzuwandeln;
einen optischen Leiter (24), um das durch die Eintrittseinheit (21) eintretende Licht zu dem photoelektrischen Wandler (25) zu leiten; und
ein erstes elektronisches Bauteil (36) und ein zweites elektronisches Bauteil (37), die um eine optische Achse des optischen Leiters (24) herum angeordnet und in einer Umfangsrichtung voneinander beabstandet sind;
wobei der optische Leiter (24) einschließt:
eine optische Faser (55) zur Übertragung von Licht; und
ein Schutzelement (57), das so angeordnet ist, dass es die optische Faser (55) abdeckt und die optische Faser (55) schützt;
wobei eine Luftschicht (58) zwischen der optischen Faser (55) und dem Schutzelement (57) ausgebildet ist;
**dadurch gekennzeichnet, dass** das erste elektronische Bauteil (36) eine Steuereinheit ist, um den Messvorgang durch die optische Vorrichtung zur Messung zu steuern, und das zweite elektronische Bauteil (37) eine Energieversorgung ist, um von außen zugeführte elektrische Energie umzuwandeln;
wobei die Steuereinheit (36) und die Energieversorgung (37) einander gegenüberliegend angeordnet sind, wobei die optische Faser (55) zwischen ihnen angeordnet ist.

2. Optische Vorrichtung zur Messung nach Anspruch 1, wobei
das erste elektronische Bauteil (36) und das zweite elektronische Bauteil (37) in Bezug auf den optischen Leiter (24) einander gegenüberliegend angeordnet sind, betrachtet in einer Richtung einer optischen Achse des durch die Eintrittseinheit (21) eintretenden Lichts.

3. Optische Vorrichtung zur Messung nach Anspruch 1 oder 2, wobei
das Schutzelement (57) aus einem Metall gebildet ist.

4. Optische Vorrichtung zur Messung nach Anspruch 1 oder 2, wobei
das Schutzelement (57) aus einem Wärmeisolator gebildet ist.

5. Optische Vorrichtung zur Messung nach einem der Ansprüche 1 bis 4, weiter umfassend ein erstes Substrat (41), auf dem das erste elektronische Bauteil (36) angebracht ist, und ein zweites Substrat (42), auf dem das zweite elektronische Bauteil (37) angebracht ist.

6. Optische Vorrichtung zur Messung nach einem der Ansprüche 1 bis 5, weiter umfassend eine Vielzahl von Substraten, die sich jeweils plattenförmig entlang einer Richtung einer optischen Achse des durch die Eintrittseinheit (21) eintretenden Lichts erstrecken, wobei
der optische Leiter (24) eine erste zugewandte Fläche (52), die der Eintrittseinheit (21) zugewandt ist, und eine zweite zugewandte Fläche (53), die dem photoelektrischen Wandler (25) zugewandt ist, in der Richtung der optischen Achse des durch die Eintrittseinheit (21) eintretenden Lichts aufweist, und
alle Substrate zwischen der ersten zugewandten Fläche und der zweiten zugewandten Fläche in der Richtung der optischen Achse des durch die Eintrittseinheit (21) eintretenden Lichts angeordnet sind.

## Revendications

1. Dispositif optique de mesure comprenant :
une unité (21) d'entrée permettant à de la lumière provenant d'un objet à mesurer d'entrer ;
un convertisseur (25) photoélectrique pour convertir la lumière reçue en un signal électrique ;
un guide (24) optique pour guider la lumière entrant par l'unité (21) d'entrée jusqu'au convertisseur (25) photoélectrique ; et
un premier composant (36) électronique et un deuxième composant (37) électronique disposés autour d'un axe optique du guide (24) optique et déplacés l'un de l'autre dans une direction circonférentielle ;
dans lequel le guide (24) optique comporte :
une fibre (55) optique pour propager de la lumière ; et
un élément (57) protecteur disposé pour recouvrir la fibre (55) optique et protéger la fibre (55) optique ;
dans lequel une couche (58) d'air est formée entre la fibre (55) optique et l'élément (57) protecteur ;
**caractérisé en ce que** le premier composant (36) électronique est un dispositif de commande pour commander une opération de mesure par le dispositif optique de mesure, et le deuxième composant (37) électronique est une alimentation en énergie destinée à transformer de l'énergie électrique alimentée de l'extérieur ;
dans lequel le dispositif de commande (36) et l'alimentation (37) en énergie sont disposés l'un en face de l'autre avec la fibre (55) optique interposée entre eux.

2. Dispositif optique de mesure selon la revendication 1, dans lequel
le premier composant (36) électronique et le deuxième composant (37) électronique sont disposés l'un en face de l'autre par rapport au guide (24) optique comme observé dans une direction d'un axe optique de la lumière entrant par l'unité (21) d'entrée.

3. Dispositif optique de mesure selon la revendication 1 ou la revendication 2, dans lequel
l'élément (57) protecteur est formé d'un métal.

4. Dispositif optique de mesure selon la revendication 1 ou la revendication 2, dans lequel
l'élément (57) protecteur est formé d'un isolant thermique.

5. Dispositif optique de mesure selon l'une quelconque des revendications 1 à 4, comprenant en outre un premier substrat (41) sur lequel est monté le premier composant (36) électronique et un deuxième substrat (42) sur lequel est monté le deuxième composant (37) électronique.

6. Dispositif optique de mesure selon l'une quelconque des revendications 1 à 5, comprenant en outre une pluralité de substrats s'étendant chacun en une forme de plaque le long d'une direction d'un axe optique de la lumière entrant par l'unité (21) d'entrée, dans lequel
le guide (24) optique a une première surface (52) de vis-à-vis qui est en vis-à-vis de l'unité (21) d'entrée et une deuxième surface (53) de vis-à-vis qui est en vis-à-vis du convertisseur (25) photoélectrique, dans la direction de l'axe optique de la lumière entrant par l'unité (21) d'entrée, et
tous les substrats sont disposés entre la première surface de vis-à-vis et la deuxième surface de vis-à-vis dans la direction de l'axe optique de la lumière entrant par l'unité (21) d'entrée.
